# EUROPÄISCHE PATENTANMELDUNG

(11) **EP 4 819 766 A2**
(43) Veröffentlichungstag der Anmeldung: **07.10.2026**
(21) Anmeldenummer: 26169783.3
(22) Anmeldetag: 31.03.2026
(51) Int. Cl.: H05B 47/175, F21V 23/04, G06F 3/01, H05B 45/10, H05B 45/20, H05B 47/13

(54) **LEUCHTVORRICHTUNG, SENSORSYSTEM UND VERFAHREN ZUR BERÜHRUNGSLOSEN STEUERUNG EINER LICHTQUELLE**

(30) Priorität: 04.04.2025 DE 102025113450
(71) Anmelder: Occhio GmbH, 81667 München (DE)
(72) Erfinder: PILAT, Lukas, 81667 München (DE); KLANG, Arvid, 81667 München (DE); ABU-HAMDAN, Jakob, 81667 München (DE); LLOYD-PÖTSCHER, Florian, 81667 München (DE); WOLFRAM, Stefan, 81667 München (DE)
(74) Vertreter: Bardehle Pagenberg Partnerschaft mbB Patentanwälte Rechtsanwälte

(57) **Zusammenfassung**

Eine Leuchtvorrichtung zur berührungslosen Steuerung einer Lichtquelle umfasst eine Mehrzahl von Sensoren zum Empfangen eines optischen Signals mit einem der Mehrzahl von Sensoren zugeordneten Detektionsbereich, der sich im Wesentlichen vollständig um eine zentrale Achse der Leuchtvorrichtung herum erstreckt. Die Leuchtvorrichtung ist dazu eingerichtet, zumindest eine Eigenschaft der Lichtquelle basierend auf einem von der Mehrzahl von Sensoren empfangenen optischen Signal zu steuern.

## Beschreibung

### 1. Technisches Gebiet

Die vorliegende Erfindung betrifft Leuchtvorrichtungen zur berührungslosen Steuerung einer Lichtquelle. Die Leuchtvorrichtungen können dazu eingerichtet sein, eine Eigenschaft der Lichtquelle basierend auf einem optischen Signal zu steuern. Die vorliegende Erfindung betrifft ferner ein Sensorsystem sowie Verfahren zur berührungslosen Steuerung einer Lichtquelle mit einer Leuchtvorrichtung.

### 2. Stand der Technik

Die Steuerung von Leuchtvorrichtungen durch einen Bediener erfolgt in der Regel manuell, und zwar durch bspw. Betätigen von Tasten, Schaltern oder ähnlichen Bedienungselementen. Es sind ferner sog. "touch"-Leuchten bekannt, die durch Berührung einer elektrisch leitenden Fläche ein- und ausgeschaltet werden, bspw. durch einen kapazitiven Berührungssensor.

Es sind auch Leuchtvorrichtungen bekannt, die durch Gesten gesteuert werden können, wobei hier in erster Linie an Gesten durch Handbewegung zu denken ist. Derartige Leuchten reagieren auf eine Annäherung und/oder Berührung bspw. eines menschlichen Körpers oder einer Hand, wobei die dabei vollführte Geste für die Steuerung der Leuchte entscheidend ist.

Derartige Leuchtvorrichtungen erfordern häufig aufwendige Sensoranordnungen zur Detektion einer Bewegung. Zu den Nachteilen zählt auch, dass komplizierte Gesten nicht zuverlässig unterschieden und erkannt werden können. Zusätzlich geben Sensoranordnungen häufig einen Erfassungsbereich vor, der in einem dem Bediener zugewandten Abschnitt der Leuchtvorrichtung angeordnet ist. Der Erfassungsbereich ist aber nicht immer zur Lichtquelle ausgerichtet, was eine Steuerung kontraintuitiv machen kann. Außerdem können derartige Leuchtvorrichtungen häufig nur Gesten erkennen, die in einem lokalen Erfassungsbereich an einer bestimmten Stelle der Leuchtvorrichtung durchgeführt werden. Dies kann die Bedienung unintuitiv machen und auch einen Einfluss auf das Erscheinungsbild und eine Leuchterscheinung der Leuchtvorrichtung haben.

Der vorliegenden Erfindung liegt daher die Aufgabe zugrunde, entsprechende Leuchtvorrichtungen, Sensorsysteme und Verfahren zur berührungslosen Steuerung einer Lichtquelle zumindest teilweise zu verbessern.

### 3. Zusammenfassung der Erfindung

Diese Aufgabe wird durch die hierhin beschriebenen Ansätze zumindest teilweise gelöst.

Ein erster Aspekt der Erfindung betrifft eine Leuchtvorrichtung zur berührungslosen Steuerung einer Lichtquelle, umfassend: eine Mehrzahl von Sensoren zum Empfangen eines optischen Signals mit einem der Mehrzahl von Sensoren zugeordneten Detektionsbereich, der sich im Wesentlichen vollständig um eine zentrale Achse der Leuchtvorrichtung herum erstreckt, wobei die Leuchtvorrichtung dazu eingerichtet ist, zumindest eine Eigenschaft der Lichtquelle basierend auf einem von der Mehrzahl von Sensoren empfangenen optischen Signal zu steuern.

Zunächst werden einige Begriffe erläutert.

Eine Leuchtvorrichtung bezeichnet im Rahmen der Erfindung jede Vorrichtung, die zusammen mit einem oder mehreren Leuchtmitteln verwendet werden kann. Die Leuchtvorrichtung kann insbesondere als Leuchtenkopf ausgebildet sein. Insbesondere kann die Leuchtvorrichtung eine (austauschbare) Lichtquelle bereits umfassen.

Als Lichtquelle können verschiedene Leuchtmittel eingesetzt werden.

Bei einer Eigenschaft der Lichtquelle kann es sich um jeden (lichttechnischen) Betriebsparameter der Lichtquelle oder eine Kombination davon handeln.

Bei einer Mehrzahl von Sensoren handelt es sich um zwei oder mehr Sensoren. In einer vorteilhaften Ausführungsform handelt es sich um vier, acht oder 16 Sensoren.

Die Sensoren können als lichtempfindliche Bauelemente bspw. dazu ausgebildet sein, das optische Signal zu empfangen/erfassen. Das optische Signal kann von einem oder mehreren Objekten, wie einer Hand, ausgesendet oder reflektiert werden. Bei dem optischen Signal kann es sich bspw. um sichtbares Licht oder infrarotes Licht oder eine Kombination handeln.

Eine zur berührungslosen Steuerung einer Lichtquelle ausgebildete Leuchtvorrichtung kann in der Regel auch durch eine Berührung der Leuchtvorrichtung gesteuert werden. Dies ist jedoch aus unterschiedlichen Gründen (Fingerabdrücke, Hygiene) häufig weniger wünschenswert. Die berührungslose Steuerung erfolgt daher in der Regel über Gesten, bei denen sich ein Objekt, vorzugsweise eine Hand oder ein Finger, an die Leuchtvorrichtung annähert, ohne dass letztere berührt werden muss. Für die Steuerung der Leuchtvorrichtungen können z.B. Handbewegungen eingesetzt werden. Dabei können z.B. unterschiedliche Gesten unterschieden werden. Dies wird auch als Gestensteuerung bezeichnet.

Innerhalb des Detektionsbereich (auch Erfassungsbereich) kann ein Objekt, insbesondere eine Hand, berührungslos erkannt werden. Ein Detektionsbereich, der sich im Wesentlichen vollständig um eine zentrale Achse der Leuchtvorrichtung herum erstreckt, ermöglicht eine berührungslose Steuerung der Leuchtvorrichtung aus im Wesentlichen jeder Richtung bzw. von jeder Seite der Leuchtvorrichtung. Ein Detektionsbereich der sich im Wesentlichen vollständig um eine zentrale Achse der Leuchtvorrichtung herum erstreckt, kann damit nicht nur größer als ein "lokaler" Detektionsbereich, der in einem speziellen Bereich einer Leuchtvorrichtung vorgesehen ist, sein, sondern kann für einen Bediener der Leuchtvorrichtung auch leichter zugänglich sein, nämlich von allen Seiten aus. Die Leuchtvorrichtung ermöglicht somit eine 360° Steuerung der Lichtquelle. Es ist somit keine Ausrichtung der Steuerung erforderlich. Dies macht die Steuerung für einen Bediener sehr einfach und intuitiv. Dies ist insbesondere vorteilhaft bei Pendelleuchten, die über großen Esstischen hängen und nicht von allen Seiten gleichermaßen zugänglich sind. Bei der Positionierung und/oder Ausrichtung der Leuchtvorrichtung ist ein Bediener frei von Überlegungen bzgl. der Steuerung der Leuchtvorrichtung. Insbesondere ermöglicht diese Ausgestaltung eine vollkommen roatationssymmetrische Leuchte, ohne dass ein bestimmter Bereich optisch ausgezeichnet wäre, in dem die Steuerung zu erfolgen hätte. Stattdessen kann die Steuerung, z.B. durch eine entsprechende Geste, im Wesentlichen an jedem Ort um die zentrale Achse herum erfolgen.

Zumindest einer der Mehrzahl von Sensoren kann dazu eingerichtet sein, ein von einer Hand im Detektionsbereich ausgesendetes und/oder reflektiertes optisches Signal, insbesondere ein Infrarotsignal, zu empfangen. Zum Beispiel kann zumindest einer der Mehrzahl von Sensoren dazu eingerichtet sein, ein optisches (z.B. infrarotes) Signal auszusenden, so dass dieses von einer Hand im Detektionsbereich so reflektiert wird, dass es von dem zumindest einen der Mehrzahl von Sensoren detektiert werden kann.

Bei einer Eigenschaft der Lichtquelle kann es sich z.B. um einen An-/Aus-Zustand, eine Lichtintensität bzw. -helligkeit und/oder eine Farbtemperatur der Lichtquelle handeln. Vorzugsweise ist die Farbtemperatur in einem Bereich zwischen 2700 K und 4000 K einstellbar. In anderen Beispielen kann z.B. eine Farbtemperatur im Bereich zwischen 2200 K und 3500 K einstellbar sein.

Ein Steuern von zumindest einer dieser oder anderer Eigenschaften der Lichtquelle durch die Leuchtvorrichtung ist anhand der nachfolgenden Beispiele beispielhaft erläutert:
Die Leuchtvorrichtung kann dazu eingerichtet sein, die zumindest eine Eigenschaft der Lichtquelle zu ändern, wenn i) eine Hand durch zumindest einen Abschnitt des Detektionsbereichs hindurch bewegt wird. Bei einer solchen Hand- oder "Wischbewegung", bei der sich eine Hand der Leuchtvorrichtung nähert und sich für einen kurzen Zeitraum zumindest teilweise im Detektionsbereich aufhält gemäß Handbewegung i) kann zumindest ein Sensor oder ggf. zwei oder mehr benachbarte Sensoren jeweils ein kurzes optisches Signal empfangen. Bei einer solchen Wischbewegung kann die Leuchtvorrichtung bspw. dazu eingerichtet sein, die Lichtquelle ein- oder auszuschalten.

Die Leuchtvorrichtung kann dazu eingerichtet sein, die zumindest eine Eigenschaft der Lichtquelle zu ändern, wenn ii) eine Hand in zumindest einem Abschnitt des Detektionsbereichs stationär gehalten wird. Wird eine Hand etwas länger in der Nähe der Leuchtvorrichtung und im Detektionsbereich gehalten gemäß Handbewegung ii), kann zumindest ein Sensor oder ggf. zwei oder mehr benachbarte Sensoren jeweils ein längeres optisches Signal empfangen. Bei einer solchen Handbewegung ii) kann die Leuchtvorrichtung bspw. dazu eingerichtet sein, die Lichtquelle zu dimmen (von hell nach dunkel oder von dunkel nach hell). Die Leuchtvorrichtung kann insbesondere dazu eingerichtet sein, die Lichtquelle im Wesentlichen so lange stufenlos zu dimmen, bis die Handbewegung ii) endet (die Hand aus dem Detektionsbereich entfernt wird). Bei Handbewegung ii) muss die Hand nur im Wesentlichen stationär gehalten werden.

Die Leuchtvorrichtung kann dazu eingerichtet sein, die zumindest eine Eigenschaft der Lichtquelle zu ändern, wenn iii) eine Hand in zumindest einem ersten Abschnitt des Detektionsbereich stationär gehalten wird und zusätzlich ein Signal aus einem zweiten Abschnitt des Detektionsbereichs von zumindest einem Sensor empfangen wird, der dem ersten Abschnitt im Wesentlichen gegenüberliegt. Bei einer sogenannten "Doppelgeste" gemäß iii), bei der sich bspw. beide Hände in unterschiedlichen (gegenüberliegenden) Abschnitten des Detektionsbereichs befinden, können zumindest zwei (im Wesentlichen gegenüberliegende) Sensoren jeweils ein längeres optisches Signal empfangen. Bei einer solchen Doppelgeste gemäß iii) kann die Leuchtvorrichtung dazu eingerichtet sein, eine Farbtemperatur der Lichtquelle zu ändern (entsprechend einer Lichtfarbe von Kaltweiß zu Warmweiß oder von Warmweiß zu Kaltweiß). In anderen Beispielen kann auch eine Farbe der Lichtquelle geändert werden, z.B. von einer ersten Farbe zu einer zweiten Farbe. Die Leuchtvorrichtung kann insbesondere dazu eingerichtet sein, eine Farbtemperatur und/oder Farbe im Wesentlichen so lange stufenlos zu ändern, bis die Doppelgeste gemäß iii) endet (die beiden Hände aus dem Detektionsbereich entfernt werden). Bei einer Doppelgeste gemäß iii) muss die Hand/die Hände nur im Wesentlichen stationär gehalten werden. Durch die Mehrzahl an Sensoren können Gesten gleichzeitig in verschiedenen Bereichen des Detektionsbereichs registriert werden.

Die Leuchtvorrichtung kann dazu eingerichtet sein, verschiedene Eigenschaften der Lichtquelle zu ändern, wenn eine Handbewegung oder Doppelgeste gemäß i), ii) oder iii) im Detektionsbereich erkannt wird. Es ist insbesondere nicht erforderlich die Leuchtvorrichtung zur Erkennung einer Handbewegung oder Doppelgeste zunächst zu aktivieren oder eine zu ändernde Eigenschaft der Lichtquelle zunächst auszuwählen.

Zusätzlich kann die Leuchtvorrichtung dazu eingerichtet sein, die zumindest eine Eigenschaft der Lichtquelle in eine jeweils entgegengesetzte Richtung zu steuern, wenn sich i), ii) oder iii) jeweils wiederholt. Ist die Leuchtvorrichtung bspw. dazu ausgebildet, die Lichtquelle bei einer Wischbewegung gemäß i) einzuschalten, so kann die Leuchtvorrichtung ferner dazu ausgebildet sein, die Lichtquelle bei einer erneuten Wischbewegung gemäß i) auszuschalten. Ist die Leuchtvorrichtung bspw. dazu ausgebildet, die Lichtquelle bei einer Handbewegung gemäß ii) von hell zu dunkel zu dimmen, so kann die Leuchtvorrichtung ferner dazu eingerichtet sein, die Lichtquelle bei einer erneuten Handbewegung gemäß ii) von dunkel zu hell zu dimmen. Ist die Leuchtvorrichtung bspw. dazu ausgebildet, die Lichtfarbe der Lichtquelle bei einer Doppelgeste gemäß iii) von Kaltweiß zu Warmweiß zu ändern, so kann die Leuchtvorrichtung ferner dazu eingerichtet sein, die Lichtfarbe bei erneuter Doppelgeste gemäß iii) von Warmweiß zu Kaltweiß ändern.

Ein zweiter Aspekt der Erfindung betrifft eine Leuchtvorrichtung zur berührungslosen Steuerung einer Lichtquelle, umfassend: zumindest einen Sensor zum Empfangen eines optischen Signals, mit einem dem Sensor zugeordneten Detektionsbereich; und einen sich zumindest teilweise um eine zentrale Achse der Leuchtvorrichtung herum erstreckenden lichtleitenden Körper mit einem ersten dem Sensor zugeordneten Oberflächenbereich und einem zweiten dem Detektionsbereich zugewandten Oberflächenbereich; wobei die Leuchtvorrichtung dazu eingerichtet ist, eine Eigenschaft der Lichtquelle basierend auf einem von dem Sensor durch den lichtleitenden Körper hindurch empfangenen optischen Signal zu steuern.

Diese Ausgestaltung ermöglicht es, einen (zumindest teilweise lichtdurchlässigen) Teil der Leuchtvorrichtung selbst als Wellenleiter für das optische Signal zu verwenden. Der Einfluss auf das Erscheinungsbild und/oder eine Leuchterscheinung der Leuchtvorrichtung ist somit denkbar minimal.

Der lichtleitende Körper der Leuchtvorrichtung kann als Wellenleiter/Lichtleiter für das optische Signal (sichtbar oder infrarot) ausgebildet sein und somit dazu eingerichtet sein, das optische Signal von dem zweiten Oberflächenbereich zu dem ersten Oberflächenbereich zu leiten bzw. zu lenken. Dies kann bspw. über Totalreflexion im Inneren des lichtleitenden Körpers erfolgen. Zusätzlich oder alternativ ist der lichtleitende Körper dazu eingerichtet, das optische Signal von dem ersten Oberflächenbereich zu dem zweiten Oberflächenbereich zu leiten. bzw. zu lenken. Die lichtleitende Eigenschaft des lichtleitenden Körpers bezieht sich insbesondere auf sichtbares Licht oder infrarotes Licht.

Bei dem lichtleitenden Körper kann es sich um ein formgebendes Element der Leuchtvorrichtung handeln. Der lichtleitende Körper kann eine optische Geometrie aufweisen, welche zu einer Leuchterscheinung der Leuchtvorrichtung beiträgt. Eine Leuchtvorrichtung, die dazu eingerichtet ist, eine Eigenschaft der Lichtquelle basierend auf einem von dem Sensor durch den lichtleitenden Körper hindurch empfangenen optischen Signal zu steuern, ermöglicht es den Detektionsbereich räumlich von dem dem Detektionsbereich zugeordneten Sensor zu beabstanden. Diese Separierung kann erfolgen ohne zusätzliche Bauteile in die Leuchtvorrichtung zu integrieren, die speziell zur Übertragung des optischen Signals ausgebildet sind und einen Einfluss auf das äußere Erscheinungsbild der Leuchtvorrichtung haben. Durch die Separierung kann die Leuchtvorrichtung in einem Bereich bedient/gesteuert werden, der möglichst einfach zugänglich und intuitiv ist. Die Steuerung kann in einen Bereich der Leuchtvorrichtung ausgelagert werden, der das Erscheinungsbild der Leuchtvorrichtung möglichst wenig beeinflusst. Bei einer Anordnung der Lichtquelle in der Nähe des Sensors, erfolgt eine Handgeste im Detektionsbereich somit im Wesentlichen zum Licht hin, was für einen Bediener sehr intuitiv ist.

Der lichtleitende Körper kann dazu eingerichtet sein, von der Lichtquelle abgegebenes Licht durch den lichtleitenden Körper hindurch an die Umgebung abzugeben. In anderen Worten, der lichtleitende Körper ist so ausgebildet, das Licht über eine Lichtaustrittsfläche abzustrahlen. Dem lichtleitenden Körper kommt somit eine Doppelfunktion zu, bei der er zum einen das optische Signal leitet und zum zweiten das von der Lichtquelle abgegebene Licht hindurchlässt. Der lichtleitende Körper kann dazu im Wesentlichen transparent sein und das von der Lichtquelle abgegebene Licht zumindest teilweise abstrahlen. Dabei wird nicht nur der Effekt der Lichtleitung des optischen Signals, sondern auch der (optischen) Transparenz des lichtleitenden Körpers ausgenutzt.

Der lichtleitende Körper kann sich im Wesentlichen vollständig um die zentrale Achse der Lichtquelle herum erstrecken. Eine (resultierende) Lichtaustrittsfläche kann sich somit im Wesentlichen vollständig um die zentrale Achse der Lichtquelle herum erstrecken. Ein Leuchtmittel ist häufig entlang einer zentralen Achse einer Leuchtvorrichtung angeordnet; erstreckt sich der lichtleitende Körper ebenfalls nahezu vollständig um diese zentrale Achse kann das Licht im Wesentlichen gleichmäßig in alle Richtung verteilt werden. Die Leuchtvorrichtung wird so durch den lichtleitenden Körper geprägt und die optische Geometrie des lichtleitenden Körpers trägt zu einer Leuchterscheinung der Leuchtvorrichtung bei. Erstreckt sich der lichtleitende Körper im Wesentlichen vollständig um die zentrale Achse der Lichtquelle herum, so kann er als 360° Wellenleiter betrachtet werden. Der 360° Wellenleiter ist dazu eingerichtet, optische Signale von jeder Position des ersten bzw. zweiten Oberflächenbereichs ausgehend zu dem zweiten bzw. ersten Oberflächenbereich zu leiten. Vorzugsweise erstreckt sich der lichtleitende Körper im Wesentlichen vollständig um die Lichtquelle und/oder ein mit der Lichtquelle verbundenes optisches Element herum.

Der lichtleitende Körper kann im Wesentlichen rotationssymmetrisch in Bezug auf die zentrale Achse der Lichtquelle und/oder Leuchtvorrichtung ausgebildet sein. Dadurch ergibt sich eine gleichmäßige Lichtverteilung durch die Leuchtvorrichtung. Ferner erhöht sich die Variabilität von mit der Leuchtvorrichtung realisierbaren Beleuchtungsszenarien bzw. Abstrahlcharakteristiken, bspw. über eine Optik.

Der lichtleitende Körper kann als Vollkörper, bspw. aus Glas und/oder Plexiglas, ausgebildet sein. In einer bevorzugten Ausführungsform ist der lichtleitende Körper als Vollkörper aus Glas ausgebildet. Der Vollkörper kann als Hohlzylinder, Hohlkegelabschnitt, Hohlellipsoidalabschnitt oder als Kombination davon ausgebildet sein. Der erste und zweite Oberflächenbereich können jeweils an den (koaxialen) Stirnflächen des Hohlzylinders, Hohlkegelabschnitts und Hohlellipsoidalabschnitts ausgebildet sein. Zumindest für einen Hohlzylinder kann sich dadurch für die Form der ersten und zweiten Oberflächenbereichs jeweils ein Kreisring ergeben.

Der Detektionsbereich kann sich im Wesentlichen vollständig entlang des zweiten Oberflächenbereichs erstrecken, insbesondere im Wesentlichen vollständig um die zentrale Achse der Lichtquelle herum. Ist der lichtleitende Körper bspw. als Hohlzylinder ausgebildet kann sich dadurch eine kreisringförmige Fläche für den zweiten Oberflächenbereich ergeben, die zusätzlich im Wesentlichen vollständig um die zentrale Achse der Leuchtvorrichtung und/oder Lichtquelle erstrecken kann. Dadurch ist der Detektionsbereich von allen Seiten der Leuchtvorrichtung zugänglich. Dies ist für einen Bediener sehr intuitiv, da der sichtbare zweite Oberflächenbereich durch seine Form und Position den (nicht sichtbaren) Detektionsbereich veranschaulicht.

Der zumindest eine Sensor kann im Wesentlichen mit dem ersten Oberflächenbereich des lichtleitenden Körpers in Berührung stehen. Das optische Signal kann so möglichst effizient auf den Sensor aufgebracht werden. Insbesondere kann der lichtleitende Körper mit dem Sensor verbunden, bspw. verklebt, sein. Der Sensor ist somit effektiv vor Umwelteinflüssen, wie bspw. vor Staub, geschützt, was die Langlebigkeit des Sensors verbessert.

Der zumindest eine Sensor kann eine Mehrzahl von Sensoren aufweisen, die um die zentrale Achse der Lichtquelle herum angeordnet sind. Die Sensoren können jeweils zumindest teilweise unterschiedlichen Bereichen des Detektionsbereichs zugeordnet sein. Die Sensoren sind somit im Wesentlichen den gleichen Lichtverhältnissen durch die Lichtquelle ausgesetzt, was eine Kalibration der Sensoren vereinfacht.

Der lichtleitende Körper kann eine Aufnahme für ein Reflektorelement aufweisen, wobei sich der zweite Oberflächenbereich entlang eines Randes der Aufnahme für ein Reflektorelement erstreckt. Die Aufnahme für ein Reflektorelement kann kreisrund sein. Das Reflektorelement kann dazu eingerichtet sein, das von der Lichtquelle abgegebene Licht bei Auftreffen auf das Reflektorelement zumindest teilweise zu reflektieren, bspw. durch eine teildurchlässige Spiegelbedampfung auf dem Reflektorelement.

Der lichtleitende Körper kann eine Aufnahme für die Lichtquelle aufweisen, wobei sich der erste Oberflächenbereich entlang eines Randes der Aufnahme für die Lichtquelle erstreckt. Die Aufnahme für die Lichtquelle kann auch in Form einer Aufnahme für eine Basis ausgebildet sein, die eine Halterung für die Lichtquelle aufweist.

Die Aufnahme für ein Reflektorelement und/oder die Aufnahme für die Lichtquelle tragen zu einem bündigen und geschlossenen Erscheinungsbild der Leuchtvorrichtung bei. Die Aufnahme für ein Reflektorelement und die Aufnahme für die Lichtquelle tragen außerdem dazu bei, dass im Wesentlichen das gesamte von der Lichtquelle abgegebene Licht von dem lichtleitenden Körper an die Umgebung abgegeben werde kann. Die Lichtquelle kann das Licht bevorzugt in Richtung des Reflektorelements abstrahlen. Die Aufnahme für ein Reflektorelement und die Aufnahme für die Lichtquelle können koaxial bezüglich der zentralen Achse der Leuchtvorrichtung und/oder an gegenüberliegenden Seiten des lichtleitenden Körpers angeordnet sein.

Die Leuchtvorrichtung gemäß dem zweiten Aspekt kann mit Merkmalen weitergebildet werden, die im Zusammenhang mit der Leuchtvorrichtung gemäß dem ersten Aspekt beschrieben sind. Die Leuchtvorrichtung gemäß dem ersten Aspekt kann mit Merkmalen weitergebildet werden, die im Zusammenhang mit der Leuchtvorrichtung gemäß dem zweiten Aspekt beschrieben sind.

Ein dritter Aspekt der Erfindung betrifft ein Sensorsystem zur berührungslosen Steuerung einer Lichtquelle, umfassend: zumindest einen Sensor zum Empfangen eines optischen Signals; wobei das Sensorsystem dazu eingerichtet ist, bei Anordnung an einem ersten Oberflächenbereich eines lichtleitenden Körpers an einem zweiten Oberflächenbereich des lichtleitenden Körpers einen Detektionsbereich bereitzustellen; wobei das Sensorsystem dazu eingerichtet ist, durch den lichtleitenden Körper hindurch optische Signale aus dem Detektionsbereich zu empfangen, so dass eine berührungsloste Steuerung der Lichtquelle ermöglicht ist. Das Sensorsystem zur berührungslosen Steuerung einer Lichtquelle kann in eine bestehende Leuchtvorrichtung mit einem lichtleitenden Körper integriert werden.

Das Sensorsystem kann dazu eingerichtet sein, einen ringförmig durchgehenden Detektionsbereich entlang des zweiten Oberflächenbereichs bereitzustellen, wenn dieser ringförmig durchgehend ist. Durch den ringförmig durchgehenden Detektionsbereich kann die Leuchtvorrichtung von jeder Seite aus berührungslos gesteuert werden.

Das Sensorsystem gemäß dem dritten Aspekt kann so ausgestaltet sein, die Funktionen der Leuchtvorrichtungen gemäß dem ersten und/oder zweiten Aspekt zu ermöglichen.

Ein vierter Aspekt der Erfindung betrifft eine Leuchtvorrichtung, insbesondere eine tragbare und/oder batteriebetriebene Leuchtvorrichtung, zur berührungslosen Steuerung einer Lichtquelle, insbesondere einer Leuchtvorrichtung gemäß dem ersten und/oder zweiten Aspekt, mit einem Lage- und/oder Bewegungssensor, wobei die Leuchtvorrichtung dazu eingerichtet ist, die Lichtquelle zumindest teilweise basierend auf einem Signal des Lage- und/oder Bewegungssensors zu steuern.

Die Leuchtvorrichtung gemäß dem vierten Aspekt kann somit dazu eingerichtet sein, sich bei Bewegung und/oder z.B. bei einer sich von einer senkrechten Ausrichtung abweichenden Lage, automatisch zu deaktivieren. Dies kann z.B. einem Transportmodus der Leuchtvorrichtung entsprechen. Sobald die Leuchtvorrichtung zu Ruhe kommt (z.B. stationär, Vibrationslevel unter einem bestimmten Level) und/oder sie z.B. aufrecht ausgerichtet ist, kann sie sich z.B. automatisch aktivieren.

Dies kann, insbesondere bei berührungslos steuerbaren Leuchtvorrichtungen ermöglichen, eine manuelle Veränderung der Position der Leuchtvorrichtung und/oder einen Transport der Leuchtvorrichtung vorzunehmen, ohne dass etwaig dabei durch den berührungslosen Detektionsbereich bewegten Objekte einen Steuervorgang auslösen, was wiederum zu einer ungewollten Änderung zumindest einer Eigenschaft der Leuchtvorrichtung führen könnte. Stellt der Lage- und/oder Bewegungssensor fest, dass die Leuchtvorrichtung transportiert wird, kann eine Bewegung eines Objekts, insbesondere einer Hand, zu einem unbeabsichtigten Steuervorgang führen, was durch die Steuerung zumindest teilweise basierend auf einem Signal des Lage- und/oder Bewegungssensors vermieden werden kann.

Die Leuchtvorrichtung kann ein Sensorsystem zur berührungslosen Steuerung einer Lichtquelle der Leuchtvorrichtung aufweisen, wobei die Leuchtvorrichtung dazu eingerichtet ist, die berührungslose Steuerung der Lichtquelle basierend auf dem Sensorsystem in Abhängigkeit vom Lage- und/oder Bewegungssensor zu aktivieren und/oder zu deaktivieren. Bei dem Sensorsystem kann es sich um ein Sensorsystem gemäß dem dritten Aspekt handeln.

Die berührungslose Steuerung kann basierend auf einem Signal des Lage- und/oder Bewegungssensors selektiv aktiviert und deaktiviert werden. Wird bspw. eine manuelle Veränderung der Position der Leuchtvorrichtung erfasst, kann die berührungslose Steuerung (vorübergehend) deaktiviert werden. Wird bspw. erfasst, dass die Leuchtvorrichtung auf einem Tisch in einem fahrenden Zug steht, kann die berührungslose Steuerung (wieder) aktiviert werden.

Ein fünfter Aspekt der Erfindung betrifft ein Verfahren zur berührungslosen Steuerung einer Lichtquelle mit einer Leuchtvorrichtung, insbesondere einer Leuchtvorrichtung nach dem ersten, zweiten und/oder vierten Aspekt, umfassend eine Mehrzahl von Sensoren zum Bereitstellen optischer Signale mit dem Schritt: Bereitstellen einer Mehrzahl optischer Signale durch die Mehrzahl von Sensoren derart, dass ein sich im Wesentlichen vollständig um eine zentrale Achse der Lichtquelle herum erstreckender Detektionsbereich erzeugt wird.

Das Verfahren ermöglicht es eine Leuchtvorrichtung von jeder Seite aus berührungslos, bspw. durch eine Handgeste, zu steuern. Die optischen Signale können bspw. durch die Ausrichtung und/oder Anordnung der Sensoren und/oder die Form eines optionalen lichtleitenden Körpers so zusammengeführt werden, dass sich ein Detektionsbereich ergibt, der im Wesentlichen vollständig um die Lichtquelle herum verläuft. Dazu können sich die optischen Signale im Detektionsbereich überschneiden. Der Detektionsbereich kann insbesondere an einer der Lichtquelle und/oder der Mehrzahl von Sensoren abgewandten Seite der Leuchtvorrichtung erzeugt werden. Die Sensoren der Mehrzahl von Sensoren können im Wesentlichen ständig die Mehrzahl optischer Signale bereitstellen, was es jederzeit möglich macht, bspw. eine Handgeste zu erfassen.

Die Sensoren der Mehrzahl von Sensoren können um eine zentrale Achse der Leuchtvorrichtung herum angeordnet sein. Insbesondere können die Sensoren der Mehrzahl von Sensoren gleichmäßig über einen Umfang verteilt sein. Die von der Mehrzahl von Sensoren bereitgestellten optischen Signale können sich im Detektionsbereich überschneiden.

Ein sechster Aspekt der Erfindung betrifft ein Verfahren zur berührungslosen Steuerung einer Lichtquelle mit einer Leuchtvorrichtung, insbesondere einer Leuchtvorrichtung nach dem ersten, zweiten und/oder vierten Aspekt, umfassend zumindest einen Sensor zum Empfangen eines optischen Signals, mit den folgenden Schritten: a. Empfangen von optischen Signalen durch den zumindest einen Sensor; b. Bestimmen eines ersten statistischen Mittelwerts basierend auf den empfangenen optischen Signalen über einen ersten Zeitraum und Bestimmen eines zweiten statistischen Mittelwerts basierend auf den empfangenen optischen Signalen über einen zweiten Zeitraum, wobei der zweite Zeitraum kürzer ist als der erste Zeitraum; und c. Ändern einer Eigenschaft der Lichtquelle, wenn eine Abweichung zwischen dem ersten statistischen Mittelwert und dem zweiten statistischen Mittelwert größer oder gleich einem vorbestimmten Grenzwert ist.

Durch eine statistische Auswertung der von dem Sensor empfangenen optischen Signale über einen vorbestimmten Zeitraum, können Fehlauslösungen bzw. ungewollte Steuervorgänge reduziert oder vermieden werden. Insbesondere zur Bereitstellung eines ausgedehnten Detektionsbereichs, von dem aus ggf. durch einen ausgedehnten Lichtleiter hindurch Signale von einem oder mehreren Sensoren empfangen werden sollen, hat es sich als zielführend herausgestellt, optische Signale statistisch auszuwerten. Hierfür und/oder zu anderen Zwecken, kann z.B. an einem Sensorsystem ein entsprechender Mikroprozessor angeordnet sein, der die Auswertung übernimmt. Somit können Gesten zuverlässig unterschieden und erkannt werden. Der erste Zeitraum kann z.B. mindestens doppelt so lange, vorzugsweise mindestens zehnmal so lang, wie der zweite Zeitraum sein. Damit kann z.B. ein Hintergrundsignal über den ersten Zeitraum erfasst werden. Der zweite Zeitraum kann z.B. möglichst klein gehalten werden, und eine Abweichung des statistischen Signals aus dem zweiten Signal vom Hintergrundsignal kann z.B. als Geste erkannt werden. Wenn der zweite Zeitraum kurz ist, kann damit eine Verzögerung zwischen dem Ausführen der Geste und der Steuerung der Leuchtvorrichtung möglichst klein gehalten werden. Somit bekommt ein Bediener zeitnah eine Rückmeldung, ob seine Geste (richtig) erkannt wurde und/oder kann eine Geste rechtzeitig beenden, um eine gewünschte Eigenschaft der Lichtquelle einzustellen. Der ersten Zeitraum kann z.B. 5 bis 100 Sekunden, vorzugsweise 10 bis 60 Sekunden, weiter bevorzugt 20 bis 50 Sekunden betragen. Der zweite Zeitraum kann z.B. 0,01 bis 2 Sekunden, 0,05 bis 1 Sekunden, oder 0,1 bis 0,5 Sekunden betragen.

Bei dem ersten und/oder zweiten statistischen Mittelwert kann es sich um einen Medianwert handeln.

Die Schritte a. bis c. können für eine Mehrzahl von Sensoren durchgeführt werden, die um eine zentrale Achse der Leuchtvorrichtung herum angeordnet sind, und bei einer Abweichung von zumindest einem Sensor, die größer als oder gleich einem vorbestimmten Grenzwert ist, kann eine Abweichung an zumindest einem im Wesentlichen gegenüberliegenden Sensor überprüft werden. Dies ermöglicht es bspw. eine (einseitige) Handbewegung von einer Doppelgeste zu unterscheiden, bei der bspw. zwei Hände in unterschiedlichen Abschnitten des Detektionsbereichs platziert werden.

Die Verfahren gemäß dem fünften und sechsten Aspekt können kombiniert werden. Die Verfahren gemäß dem fünften und sechsten Aspekt können jeweils mit Merkmalen weitergebildet werden, die im Zusammenhang mit der Leuchtvorrichtung gemäß dem ersten, zweiten und vierten Aspekt und/oder des Sensorsystems gemäß dem dritten Aspekt beschrieben sind, und umgekehrt.

### 4. Beschreibung der Figuren

Die Erfindung wird nachfolgend unter Bezugnahme auf die beigefügten Figuren anhand vorteilhafter Ausführungsformen beispielhaft beschrieben.

Im Übrigen kann jede hierin beschriebene Funktion sich auch ein Verfahren oder eine Vorrichtung beziehen, auch wenn dies nicht in allen Fällen explizit beschrieben ist.
Fig. 1 zeigt schematisch eine Schnittansicht einer erfindungsgemäßen Leuchtvorrichtung zur berührungslosen Steuerung einer Lichtquelle.
Fig. 2 zeigt eine perspektivische Ansicht der Leuchtvorrichtung der Fig. 1 ohne Reflektorelement.
Fig. 3 zeigt eine perspektivische Ansicht der Leuchtvorrichtung der Fig. 2 ohne lichtleitenden Körper.

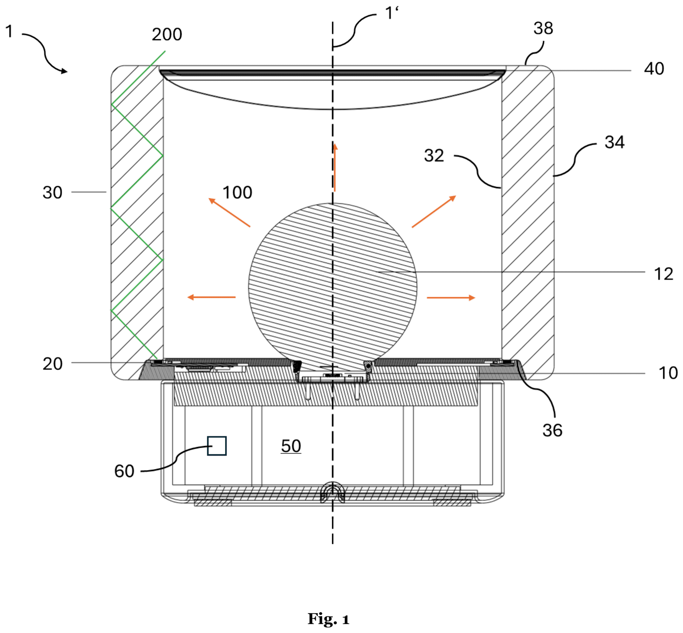

Figs. 1-3 zeigen eine beispielhafte Leuchtvorrichtung 1. Bei der Leuchtvorrichtung 1 kann es sich um eine tragbare und/oder batteriebetriebene Leuchtvorrichtung handeln. Die Leuchtvorrichtung 1 ist zur berührungslosen/kontaktlosen Steuerung einer Lichtquelle 10 eingerichtet. Die Lichtquelle 10 kann als Teil der Leuchtvorrichtung 1 ausgebildet sein. Die Lichtquelle 10 kann austauschbar sein. Die Lichtquelle 10 kann insbesondere im Bereich einer Basis 50 der Leuchtvorrichtung angeordnet sein. Die Basis 50 ist im Beispiel der Fig. 1 in einem Sockelbereich der Leuchtvorrichtung angeordnet, dies ist jedoch rein exemplarisch. In anderen Beispielen können mehrere Lichtquellen vorgesehen sein.

Als Lichtquellen können verschiedene Leuchtmittel eingesetzt werden. Die Lichtquelle 10 kann insbesondere eine Leuchtdiode (LED) aufweisen. Die Lichtquelle 10 kann auch mehrere LEDs umfassen, insbesondere warm weiße LEDs und/oder kalt weiße LEDs. In einer beispielhaften Ausführungsform kann die Lichtquelle 10 ein LED-Board aufweisen und mit drei warm weißen LEDs und drei kalt weißen LEDs bestückt sein. Die Erfindung ist aber nicht auf solche Ausführungsbeispiele beschränkt, vielmehr für die Lichtquelle 10 auch bspw. ein Halogen Leuchtmittel verwendet werden.

Die Leuchtvorrichtung 1 kann optional eine Optik 12 aufweisen. Die Optik 12 kann mit der Leuchtvorrichtung 1 im Bereich der Lichtquelle 10 über eine Halterung derart verbunden sein, dass das von der Lichtquelle 10 abgegebene Licht über die Optik 12 abgestrahlt wird gemäß Pfeil 100. Die Optik 12 kann dabei bspw. gerichtetes Licht 100 und/oder diffuses Licht erzeugen. In einer beispielhaften Ausführungsform ist die Optik 12 aus Glas und/oder im Wesentlichen kugelförmig ausgebildet.

Die Leuchtvorrichtung 1 weist eine zentrale Achse 1' auf. Die zentralen Achse 1' kann durch einen geometrischen Mittelpunkt der Leuchtvorrichtung 1 verlaufen. Dies ist aber nicht zwingend. Die Lichtquelle 10 kann an einer Stelle entlang der zentralen Achse 1' der Leuchtvorrichtung 1 angeordnet sein. Es können aber z.B. auch mehrere Lichtquellen um die zentrale Achse 1' der Leuchtvorrichtung 1 herum angeordnet sein. Die zentrale Achse 1' kann z.B. einer zentralen Achse einer Lichtquelle entsprechen. Die zentrale Achse 1' der Leuchtvorrichtung kann bei einer Pendel- oder Stehleuchte bspw. im Wesentlichen vertikal verlaufen.

Die Leuchtvorrichtung 1 der Fig. 1 weist eine Mehrzahl von Sensoren 20 zum Empfangen eines optischen Signals 200 auf. Bei der Mehrzahl von Sensoren 20 kann es sich um eine Mehrzahl von Infrarotsensoren (IR-Sensoren) handeln. IR-Sensoren sind lichtempfindliche Bauelemente, die Infrarotstrahlung erfassen können. Es können passive IR-Sensoren eingesetzt werden, die Infrarotstrahlung ausschließlich empfangen. Es können aktive IR-Sensoren eingesetzt werden, die selbst Infrarotstrahlung (Wärmestrahlung) bereitstellen. Das optische Signal 200 kann ein Infrarotsignal (IR-Signal) sein.

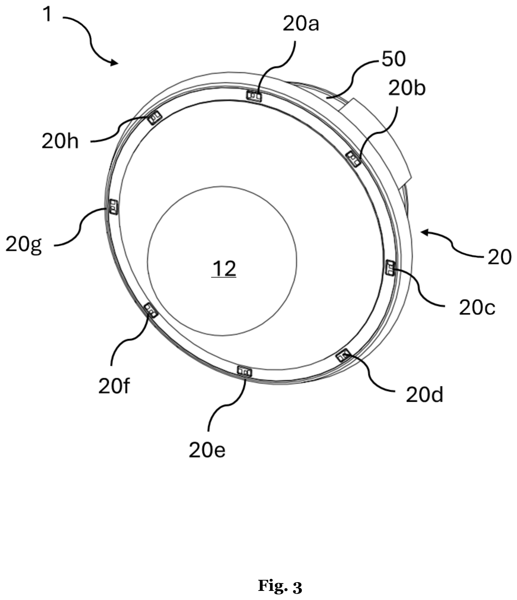

In dem Ausführungsbeispiel der Fig. 1 weist die Leuchtvorrichtung 1 eine Mehrzahl von Sensoren 20 gemäß insgesamt acht Sensoren auf. Die Verwendung von acht Sensoren ist jedoch rein exemplarisch. Die Mehrzahl von Sensoren 20 kann je nach Größe und Form der Leuchtvorrichtung frei gewählt werden und insbesondere auch vier oder 16 Sensoren umfassen. Die Sensoren sind um die zentrale Achse 1' der Leuchtvorrichtung 1 herum angeordnet. Die Sensoren können jeweils im gleichen Abstand zur zentralen Achse 1' angeordnet und gleichmäßig über einen Kreisumfang verteilt (8 x 45°) sein. Die Anzahl und oder Anordnung der Sensoren kann je nach Größe und Form der Leuchtvorrichtung 1 gewählt werden. Die beispielhafte Anordnung mit acht IR-Sensoren 20a-20h ist im Zusammenhang mit Fig. 3 erläutert.

Der Mehrzahl von Sensoren 20 ist ein Detektionsbereich (nicht dargestellt) zugeordnet. Der Detektionsbereich ist der Bereich in dem ein Objekt, wie bspw. eine Hand, erfasst werden kann. Der Detektionsbereich befindet sich in Fig. 1 in einem oberen Bereich der Leuchtvorrichtung 1, also in einem dem Sockelbereich gegenüberliegenden Bereich der Leuchtvorrichtung 1. Aus dem Detektionsbereich kann ein optisches Signal 200 auf die Mehrzahl von Sensoren aufgebracht werden. Befindet sich bspw. eine Hand oder allg. ein Objekt im Detektionsbereich, empfängt zumindest einer der Mehrzahl von Sensoren 20 ein von der Hand oder dem Objekt ausgesendetes und/oder reflektiertes optisches Signal 200.

Die Mehrzahl von Sensoren 20 sind so angeordnet und/oder ausgerichtet, dass sich der Detektionsbereich im Wesentlichen vollständig um die zentrale Achse 1' der Leuchtvorrichtung 1 erstreckt. Die Steuerung der Leuchtvorrichtung 1 ist somit von jeder Seite aus möglich, insbesondere über 360°. Die Leuchtvorrichtung 1 kann somit komplett rotationssymmetrisch um die zentrale Achse 1' ausgestaltet sein. Eine Hervorhebung des Detektionsbereichs für den Benutzer ist nicht nötig, da sich dieser im Wesentlichen vollständig um die zentrale Achse 1' herum erstreckt. Dazu können sich die den einzelnen (benachbarten) Sensoren zugeordneten Sensorbereiche so überschneiden, dass sich ein resultierende Detektionsbereich im Wesentlichen kreis- bzw. ringförmig und durchgehend um die Leuchtvorrichtung 1 herum erstreckt. Dadurch dass sich der Detektionsbereich, in dem bspw. eine Hand oder allgemein ein Objekt eine berührungslose Steuerung der Lichtquelle bewirken kann, im Wesentlichen kreisringförmig um die Leuchtvorrichtung 1 herum erstreckt, kann die Leuchtvorrichtung 1 von jeder Seite aus, bspw. durch eine einfache Handbewegung, gesteuert werden.

Die Mehrzahl von Sensoren 20 kann zumindest teilweise auch als Emitter ausgebildet sein. Zusätzlich als Emitter ausgebildete Sensoren emittieren bspw. Infrarotstrahlung, die von der Hand oder dem Objekt im Detektionsbereich reflektiert wird und dann als optisches Signal 200 von zumindest einem Sensor der Mehrzahl von Sensoren 20 empfangen wird.

Die Leuchtvorrichtung 1 ist dazu eingerichtet, zumindest eine Eigenschaft der Lichtquelle basierend auf einem von der Mehrzahl von Sensoren empfangenen optischen Signal zu steuern. Zu den Eigenschaften der Lichtquelle zählt zumindest ein An-/Aus-Zustand, eine Lichtintensität und eine Farbtemperatur bzw. Lichtfarbe. Bei einer Steuerung der Eigenschaft der Lichtquelle kann es sich folglich bspw. um ein Ein- bzw. Ausschalten, ein Dimmen (entsprechend einer Helligkeitssteuerung von hell zu dunkel oder von dunkel zu hell) oder ein Ändern der Farbtemperatur (entsprechend einer Lichtfarbe z.B. zwischen Kaltweiß in 4000 K und Warmweiß in 2700 K und/oder Kaltweiß in 3500 K und Warmweiß in 2200 K) handeln. Die Eigenschaft der Lichtquelle 10 kann stufenlos eingestellt werden, bspw. durch Einstellen der Lichtintensität.

Dazu kann die Leuchtvorrichtung 1 eine Steuerungseinrichtung (nicht dargestellt) zum Ansteuern der Lichtquelle 10 aufweisen. Die Steuerungseinrichtung kann eine Leiterplatte mit einer Elektronik zum Ansteuern der Lichtquelle 10 basierend auf einem von der Mehrzahl von Sensoren 20 bereitgestellten Sensorsignal umfassen. Die Steuerungseinrichtung kann im Bereich der Basis 50 der Leuchtvorrichtung 1, bspw. im Sockelbereich, angeordnet sein. Die berührungslos steuerbare Leuchtvorrichtung 1 der Fig. 1 ist frei von Schaltern und/oder Tasten zur Steuerung der Leuchtvorrichtung.

Die Eigenschaft der Lichtquelle 10 kann bspw. bei einer Berührung oder Annäherung mit einer Hand im Detektionsbereich der Leuchtvorrichtung 1 gesteuert werden. Eine Gestensteuerung ermöglicht darüber hinaus die gezielte Anpassung unterschiedlicher Eigenschaften der Lichtquelle. Beispielsweise kann eine kurze Handbewegung durch den Detektionsbereich bewirken, dass die Lichtquelle 10 an- oder ausgeschaltet wird. Die Leuchtvorrichtung 1 ist somit dazu eingerichtet, zumindest eine Eigenschaft der Lichtquelle zu ändern, wenn eine Hand durch zumindest einen Abschnitt des Detektionsbereich hindurch bewegt wird.

Beispielsweise kann ein längeres Halten der Hand im Detektionsbereich, das Licht auf oder ab Dimmen. Die Leuchtvorrichtung ist somit dazu eingerichtet, zumindest eine Eigenschaft der Lichtquelle zu ändern, wenn eine Hand in zumindest einem Abschnitt des Detektionsbereich stationär gehalten wird (sich im Wesentlichen nicht bewegt). Beispielsweise kann eine Farbtemperatur der Leuchtvorrichtung reguliert 1 werden durch eine Handbewegung, die sich im Wesentlichen von einem Ende zu einem gegenüberliegenden Ende des Detektionsbereichs erstreckt (je nach Größe des Detektionsbereichs) oder bei der beide Hände in unterschiedlichen Abschnitten des Detektionsbereichs platziert werden (sog. Doppelgeste). Die Leuchtvorrichtung 1 ist somit dazu eingerichtet, zumindest eine Eigenschaft der Lichtquelle 10 zu ändern, wenn eine Hand in zumindest einem ersten Abschnitt des Detektionsbereich stationär gehalten wird und zusätzlich ein Signal aus einem zweiten Abschnitt des Detektionsbereichs von zumindest einem Sensor der Mehrzahl an Sensoren empfangen wird, der dem ersten Abschnitt im Wesentlichen gegenüber liegt. Bei einem gegenüberliegenden Abschnitt kann es sich beispielsweise um einen gegenüberliegenden Quadranten des Detektionsbereichs handeln. Je nach Größe der Leuchtvorrichtung und/oder Anzahl der Sensoren kann der Detektionsbereich in unterschiedliche große und unterschiedliche viele Bereiche unterteilt werden.

Im Beispiel der Figs. 1 bis 3 sind die Mehrzahl von Sensoren 20 und die Lichtquelle 10 in einem Sockelbereich der Leuchtvorrichtung 1 angeordnet. Ein Bediener kann somit eine Geste im Detektionsbereich in Richtung des zu steuernden Lichts der Lichtquelle 10 ausführen, was die berührungslose Steuerung besonders intuitiv macht. Damit eine Geste, wie bspw. eine Handbewegung, als Steuervorgang registriert werden kann, sind die Mehrzahl von Sensoren 20 ständig aktiv. Um einen Crosstalk (Übersprechen zwischen den Kanälen) zwischen den im Wesentlichen ständig aktiven Sensoren zu reduzieren, sind die Sensoren der Mehrzahl von Sensoren 20 zumindest teilweisezeitversetzt eingeschaltet.

Die in Fig. 1 gezeigte Leuchtvorrichtung 1 zur berührungslosen Steuerung der Lichtquelle 10 umfasst einen lichtleitenden Körper 30. Der lichtleitende Körper 30 kann ein formgebendes Element der Leuchtvorrichtung 1 sein. Im Beispiel der Leuchtvorrichtung 1, erstreckt sich der lichtleitende Körper 30 im Wesentlichen vollständig um die zentrale Achse 1' der Leuchtvorrichtung 1 herum. Alternativ könnte sich der lichtleitende Körper 30 auch nur abschnittsweise um die zentrale Achse 1' der Leuchtvorrichtung 1 herum erstrecken.

Der lichtleitende Körper 30 weist einen ersten der Mehrzahl an Sensoren 20 zugeordneten Oberflächenbereich 36 auf. Der lichtleitende Körper 30 weist einen zweiten dem Detektionsbereich zugewandten Oberflächenbereich 38 auf. Der erste und zweite Oberflächenbereich 36, 38 erstrecken sich im Wesentlichen an gegenüberliegenden Seiten des lichtleitenden Körpers 30. Der erste und zweite Oberflächenbereich 36, 38 sind koaxial in Bezug auf die zentrale Achse 1' der Leuchtvorrichtung 1 angeordnet. Der lichtleitende Körper 30 kann als Lichtleiter/Wellenleiter ausgebildet sein, um das optische Signal 200 zu leiten. Der lichtleitende Körper 30 kann insbesondere dazu eingerichtet sein, das optische Signal 200 von dem zweiten Oberflächenbereich 38 zu dem ersten Oberflächenbereich 36 zu leiten, und auf zumindest einen der Mehrzahl von Sensoren 30 aufzubringen. Innerhalb des lichtleitenden Körpers 30 gelangt das optische Signal 200 über Totalreflexion von dem zweiten Oberflächenbereich 38 zu dem ersten Oberflächenbereich 36. In anderen Ausführungsbeispielen kann das optische Signal bspw. auch in mehr, weniger oder sogar ohne Reflexionen innerhalb des lichtleitenden Körpers 30 zwischen dem ersten und zweiten Oberflächenbereich propagieren. Die in Fig. 1 gezeigte Reflexion innerhalb des lichtleitenden Körpers ist stark vereinfacht dargestellt und dient lediglich zur Darstellung des grundlegenden Konzepts der internen Reflexion.

Der lichtleitende Körper 30 kann auch dazu eingerichtet sein, ein optisches Signal 200 von dem ersten Oberflächenbereich 36 zu dem zweiten Oberflächenbereich 38 zu leiten, und somit von zumindest einem der Mehrzahl an Sensoren zum Detektionsbereich zu leiten, wo es bspw. an einer Hand reflektiert werden kann. Die Leuchtvorrichtung 1 ist dazu eingerichtet, eine Eigenschaft der Lichtquelle basierend auf einem von zumindest einem Sensor der Mehrzahl von Sensoren durch den lichtleitenden Körper 30 hindurch empfangenen optischen Signal 200 zu steuern. Der lichtleitende Körper 30 ermöglicht es somit, das optische Signal effektiv zu lenken.

Der Detektionsbereich kann sich im Wesentlichen vollständig entlang des zweiten Oberflächenbereichs 38 erstrecken. In diesem Fall ist der zweite Oberflächenbereich 38 im Wesentlichen vollständig als "Aktivierungsfläche" betrachtet werden, wobei bei einer Berührung oder Annäherung mit einer Hand im Bereich der Aktivierungsfläche die Lichtquelle 10 gesteuert werden kann. Die Aktivierungsfläche dient der Veranschaulichung des Detektionsbereichs für einen Bediener. Eine kontaktlose Steuerung ist zumindest unter ästhetischen und hygienischen Gesichtspunkten zu bevorzugen. Der Detektionsbereich erstreckt sich von dem zweiten Oberflächenbereich 38 aus einige cm, bspw. 4-5 cm. in eine von dem ersten Oberflächenbereich 38 bzw. der Mehrzahl an Sensoren 20 abgewandte Richtung. Der Detektionsbereich erstreckt sich im Beispiel der Fig. 1 im Wesentlichen kreisringförmig oberhalb des lichtleitenden Körpers 30.

Der erste Oberflächenbereich 36 des lichtleitende Körper 30 kann mit der Mehrzahl von Sensoren 20 in Berührung stehen. Insbesondere kann der lichtleitende Körper 30 mit der Mehrzahl von Sensoren 20 verbunden, bspw. verklebt, sein. Dadurch lassen sich Verluste der optischen Signale 200 zwischen Detektionsbereich und der Mehrzahl von Sensoren 20 reduziert. Außerdem ergibt sich so ein bündiges und geschlossenes Erscheinungsbild der Leuchtvorrichtung 1 und die Mehrzahl von Sensoren ist vor Umwelteinflüssen geschützt.

Der lichtleitende Körper 30 erstreckt sich im Wesentlichen vollständig um eine zentrale Achse der Lichtquelle 10 herum (identisch zur zentralen Achse 1' der Leuchtvorrichtung 1). Der lichtleichtende Körper 30 kann sich im Wesentlichen vollständig um die Lichtquelle 10 und/oder die optionale Optik 12 erstrecken. Im gezeigten Ausführungsbeispiel ist der lichtleitende Körper 30 daher dazu eingerichtet, von der Lichtquelle abgegebenes Licht 100 durch den lichtleitenden Körper hindurch an die Umgebung abzugeben. Dazu weist der lichtleitende Körper eine Lichteintrittsfläche 32 und eine Lichtaustrittsfläche 34 zur Emission von Licht auf. Der lichtleitende Körper ist dazu eingerichtet, Licht der Lichtquelle 10 über die Lichtaustrittsfläche 34 abzustrahlen. Die Lichtaustrittsfläche 34 erstreckt sich im Wesentlichen vollständig (360°) um die Leuchtvorrichtung 1 herum. Die Lichtaustrittsfläche 34 kann auch zumindest teilweise den zweiten Oberflächenbereich 38 umfassen.

Der lichtleitende Körper 30 kann als Vollkörper ausgebildet sein. Der lichtleitende Körper 30 kann im Wesentlichen transparent sein und bspw. aus Glas oder Plexiglas ausgebildet sein. In der gezeigten Ausführungsform ist der lichtleitende Körper 30 aus Kristallglas und aus dem Vollen geschnitten. In diesem Beispiel ist der lichtleitende Körper 30 als Hohlzylinder mit konstantem Durchmesser ausgebildet. Der lichtleitende Körper kann auch vollständig oder zumindest abschnittsweise trapezförmig oder rundbauchig ausgebildet sein. Der lichtleitende Körper kann rotationssymmetrisch um die zentrale Achse 1' der Leuchtvorrichtung sein.

Der lichtleitende Körper 30 weist eine Aufnahme für ein Reflektorelement 40 auf. Das Reflektorelement 40 erscheint im Wesentlichen weiß. Das Reflektorelement 40 kann eine teildurchlässige Spiegelbedampfung aufweisen. Das Reflektorelement 40 kann als Filter derart ausgebildet sein, dass je nach Blickwinkel nur Licht einer bestimmten Wellenlänge (Farbe) das Reflektorelement 40 passiert. Der zweite Oberflächenbereich 38 erstreckt sich entlang eines Randes der Aufnahme für das Reflektorelement 40. Wie bereits erläutert, ist eine Gestensteuerung im Bereich des Randes der Aufnahme für das Reflektorelement 40 besonders intuitiv und leicht zugänglich.

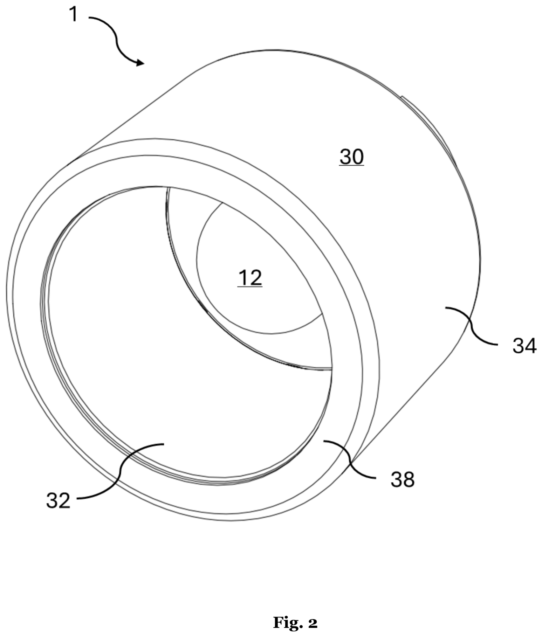

Der lichtleitende Körper 30 kann eine Aufnahme für die Lichtquelle 10 aufweisen. In dem gezeigten Ausführungsbeispiel ist die Lichtquelle 10 als Teil der Basis 50 der Leuchtvorrichtung 1 ausgebildet. Die Aufnahme für die Lichtquelle 10 erstreckt sich somit zumindest teilweise um die Basis 50, wodurch sich ein bündiges und geschlossenes Erscheinungsbild der Leuchtvorrichtung 1 ergibt (siehe Fig. 2). Der erste Oberflächenbereich 36 kann sich entlang eines Randes der Aufnahme für die Lichtquelle 10 erstrecken. Die Mehrzahl von Sensoren 20 kann im Wesentlichen kreisförmig um die zentrale Achse 1' der Lichtquelle herum angeordnet sein. Die Aufnahme für das Reflektorelement und die Aufnahme für die Lichtquelle 10 sind koaxial zueinander angeordnet.

Der lichtleitende Körper 30 ist in diesem Ausführungsbeispiel als 360° Wellenleiter ausgebildet. Innerhalb des lichtleitenden Körpers kann das optische Signal 200 über Totalreflexion zwischen dem im Wesentlichen kreisringförmigen ersten Oberflächenbereich 36 und dem im Wesentlichen kreisringförmigen zweiten Oberflächenbereich 38 propagieren. Dazu sind die die Sensoren der Mehrzahl von Sensoren 20 jeweils so angeordnet, dass sie das optische Signal 200 unter einem Winkel bereitstellen, der es erlaubt, dass das optische Signal über Totalreflexion bis zum zweiten Oberflächenbereich 38 propagiert bzw. das optische Signal 200 in einem (Propagations-)Winkel empfangen können, mit dem sich das optische Signal im lichtleitenden Körper ausbreitet. Dies ergibt sich zum einen aus der Bedingung für Totalreflexion und zum anderen aus der Form des lichtleitenden Körpers zwischen ersten und zweiten Oberflächenbereich 36, 38, insbesondere einer Wanddicke des lichtleitenden Körpers 30. Jedem Bereich des zweiten Oberflächenbereichs 38 lässt sich zumindest ein Sensor der Mehrzahl von Sensoren 20 zuordnen. Dies ermöglicht insbesondere eine Detektion einer sog. Doppelgeste, bei der bspw. beide Hände in unterschiedlichen (gegenüberliegenden) Abschnitten des Detektionsbereichs gehalten werden.

Bei der in Fig. 1 gezeigten Leuchtvorrichtung 1 handelt es sich beispielhaft um eine tragbare und batteriebetriebene Leuchtvorrichtung 1 zur berührungslosen Steuerung der Lichtquelle 10. Aufgrund der berührungslosen Steuerung könnte eine manuelle Veränderung der Position der Leuchtvorrichtung 1, bspw. wenn die Leuchtvorrichtung 1 durch einen Bediener getragen wird, fälschlicherweise als ein Steuervorgang gewertet wird, insbesondere da die Sensoren der Mehrzahl von Sensoren 20 ständig aktiv sind. Dazu weist die Leuchtvorrichtung 1 zumindest einen Lage- und/oder Bewegungssensor 60 auf, und ist dazu eingerichtet, die Lichtquelle 10 zumindest teilweise basierend auf einem Signal des Lage- und/oder Bewegungssensors zu steuern.

Bei einer Positionsveränderung und/oder Bewegung der Leuchtvorrichtung, kann die Leuchtvorrichtung 1 bspw. dazu eingerichtet sein, bei einer detektierten Handbewegung keinen Steuervorgang auszulösen. Auf diese Weise werden Fehlauslösungen reduziert oder vermieden. Der Lage- und/oder Bewegungssensor 60 ist beispielhaft im Bereich der Basis 50 im Sockelbereich der Leuchtvorrichtung 1 angeordnet. Die Leuchtvorrichtung 1, insbesondere die Steuereinrichtung, kann dazu eingerichtet sein, die berührungslose Steuerung der Lichtquelle 10 basierend auf der Mehrzahl von Sensoren 20 in Abhängigkeit vom Lage- und/oder Bewegungssensor zu aktivieren und/oder zu deaktivieren.

Fig. 2 zeigt eine perspektivische Ansicht der Leuchtvorrichtung 1 gemäß Fig. 1. Der lichtleitende Körper 30 kann sich bspw. wie eine Glasvase um die der Lichtquelle (nicht sichtbar in Fig. 2) zugeordnete Optik 12 erstrecken. Der lichtleitende Körper 30 kann eine optische Geometrie aufweisen, welche eine Leuchterscheinung der Leuchtvorrichtung beeinflusst oder prägt. Der lichtleitende Körper 30 kann im Wesentlichen rotationssymmetrisch ausgebildet sein in Bezug auf eine zentrale Achse der Lichtquelle und/oder Leuchtvorrichtung. Die lichtleitenden Körper 30 kann als Hohlzylinder ausgebildet sein. Alternativ kann der lichtleitende Körper 30 als Hohlkegelabschnitt oder Hohlellipsoidalabschnitt ausgebildet sein. Der lichtleitend Körper 30 kann eine Wanddicke (Abstand zwischen der Lichteintrittsfläche 32 und der Lichtaustrittsfläche 34) von mehreren cm aufweisen, insbesondere mindestens 2 cm. Der lichtleitende Körper 30 kann im Wesentlichen transparent oder transluzent sein, so dass das von der Lichtquelle abgegebene Licht zumindest teilweise durch den lichtleitenden Körper 30 hindurchscheint. In dem gezeigten Ausführungsbeispiel ist der lichtleitende Körper 30 einteilig ausgebildet.

Fig. 3 zeigt eine perspektivische Ansicht der Leuchtvorrichtung 1 gemäß Fig. 2 ohne den lichtleitenden Körper 30. Fig. 3 zeigt exemplarisch das Sensorsystem zur berührungslosen Steuerung einer Lichtquelle, umfassend Sensoren 20a-20h, die im Bereich der Basis 50 im Sockelbereich der Leuchtvorrichtung 1 angeordnet sind. Die Mehrzahl von Sensoren 20 ist insbesondere so angeordnet, dass bei einer Anordnung an einem ersten Oberflächenbereich 36 des lichtleitenden Körpers 30, die Mehrzahl von Sensoren 20 mit dem lichtleitenden Körper 30 in Berührung stehen. Die Mehrzahl von Sensoren 20 sind in diesem Ausführungsbeispiel als acht IR-Sensoren 20a-20h ausgebildet. Jeder IR-Sensor 20a-20h weist zumindest eine Emitter- und eine Empfängerdiode auf.

Die Mehrzahl von Sensoren 20 ist zum einen dazu eingerichtet, bei Anordnung an einem dem ersten Oberflächenbereich 36 des lichtleitenden Körpers 30 an einem zweiten Oberflächenbereich des lichtleitenden Körpers 30 einen Detektionsbereich bereitzustellen. Der Detektionsbereich ist im Wesentlichen ringförmig durchgehend entlang des zweiten Oberflächenbereichs bereitgestellt werden, da der zweite Oberflächenbereich ringförmig durchgehend ist. Durch die Verwendung von acht IR-Sensoren 20a-20h, die im Wesentlichen gleichmäßig über einen Umfang der Leuchtvorrichtung 1 verteilt sind, kann der Detektionsbereich im Wesentlichen lückenlos bereitgestellt werden. Die Mehrzahl von Sensoren 20 ist zum anderen dazu eingerichtet, durch den lichtleitenden Körper hindurch optische Signale aus dem Detektionsbereich, bspw. durch eine Handbewegung, zu empfangen, so dass eine berührungslose Steuerung der Lichtquelle ermöglicht wird. Das dargestellte Sensorsystem ermöglicht es somit, die Leuchtvorrichtung 1 ohne zusätzliche Bauteile, wie Signalleiter, zwischen dem ersten und zweiten Oberflächenbereich 36, 38 auszubilden.

Die IR-Sensoren 20a-20h sind ständig aktiv damit jederzeit eine Handbewegung als Steuervorgang registriert werden kann. Um einen Crosstalk (Übersprechen zwischen den Kanälen) zwischen den IR-Sensoren 20a-20h zu reduzieren, sind die Sensoren zumindest teilweise zeitversetzt eingeschaltet. Die IR-Sensoren 20a-20h stellen eine Mehrzahl optischer Signale (nicht dargestellt) zu Verfügung, sodass ein sich im Wesentlichen vollständig um die zentrale Achse der Lichtquelle 10 herum erstreckender Detektionsbereich erzeugt wird. Dazu können sich die Mehrzahl optischer Signale, insbesondere von benachbarten IR-Sensoren 20a-20h, im Detektionsbereich überschneiden.

Um einen Steuervorgang durch eine Handbewegung zuverlässig zu registrieren ist eine Unterscheidung zwischen einer Handbewegung im Detektionsbereich und einer sonstigen Änderung in der Umgebung der Leuchtvorrichtung wichtig. Jeder IR-Sensor 20a-20c bestimmt auf Basis der von diesem IR-Sensor empfangenen optischen Signale einen ersten statistischen Mittelwert über einen ersten Zeitraum und einen zweiten statistischen Mittelwert über einen zweiten Zeitraum, wobei der zweite Zeitraumkürzer ist als der erste Zeitraum. Bei dem ersten Zeitraum kann es sich um einen Zeitraum von bspw. 30 Sekunden handeln. Bei dem zweiten Zeitraum kann es sich um einen Zeitraum von bspw. 0,1 Sekunde handeln. Der zweite Zeitraum sollte so kurz wie möglich gewählt werden, damit die Leuchtvorrichtung 1 innerhalb einer angemessenen Reaktionszeit agiert und bspw. nahezu in Echtzeit eine Eigenschaft der Lichtquelle steuert. Bei dem ersten und zweiten statistischen Mittelwert kann es sich jeweils um einen Medianwert oder einen Durchschnittswert handeln. Dem ersten und zweiten statistischen Mittelwert können jedoch auch unterschiedliche statistische Mittelwerte zugrunde liegen, bspw. einmal Durchschnittswert und einmal Medianwert.

Bei einer Abweichung zwischen dem ersten statistischen Mittelwert und dem zweiten statistischen Mittelwert, die größer oder gleich einem vorbestimmten Grenzwert ist, wird ein Steuervorgang registriert und eine Eigenschaft der Lichtquelle geändert. Der Grenzwert kann von den Umgebungsbedingungen, bspw. Lichtverhältnissen, abhängen. Wird für zumindest einen Sensor eine Abweichung größer oder gleich dem vorbestimmten Grenzwert registriert, wird zunächst eine Abweichung an zumindest einem im Wesentlichen gegenüberliegenden Sensor überprüft, damit auch eine Doppelgeste detektiert werden kann.

Die in Fig. 1-3 gezeigte Leuchtvorrichtung 1 ist beispielhaft als tragbare Tischleuchte ausgebildet. Die Leuchtvorrichtung kann auch als Stehleuchte zusätzlich ein Kabel aufweisen. Die Leuchtvorrichtung 1 weist beispielhaft eine Basis 50 zur Halterung des Lichtquelle 10 auf, wobei die Basis 50 gleichzeitig als Sockel bzw. Leuchtenfuß fungiert und die Lichtquelle bevorzugt nach oben abstrahlt. Die Basis 50 kann bspw. auf einer der Lichtquelle nicht zugewandten Seite so ausgebildet sein, dass sie mit einer Ladestation verbunden werden kann, bspw. durch Aufstellen. Die Leuchtvorrichtung 1 kann als Pendelleuchte- oder Stehleuchte ausgebildet sein, wobei die Basis 50 eine Halterung für die Lichtquelle aufweist und die Lichtquelle bevorzugt nach unten abstrahlt.

Die Offenbarung umfasst zusätzlich die folgenden nummerierten Ausführungsformen:
1. Leuchtvorrichtung zur berührungslosen Steuerung einer Lichtquelle, umfassend:
   eine Mehrzahl von Sensoren zum Empfangen eines optischen Signals mit einem der Mehrzahl von Sensoren zugeordneten Detektionsbereich, der sich im Wesentlichen vollständig um eine zentrale Achse der Leuchtvorrichtung herum erstreckt,
   wobei die Leuchtvorrichtung dazu eingerichtet ist, zumindest eine Eigenschaft der Lichtquelle basierend auf einem von der Mehrzahl von Sensoren empfangenen optischen Signal zu steuern.
2. Leuchtvorrichtung nach Ausführungsform 1, wobei zumindest einer der Mehrzahl von Sensoren dazu eingerichtet sind, ein von einer Hand im Detektionsbereich ausgesendetes und/oder reflektiertes optisches Signal, insbesondere ein Infrarotsignal, zu empfangen.
3. Leuchtvorrichtung nach Ausführungsform 1 oder 2, wobei die Leuchtvorrichtung dazu eingerichtet ist, die zumindest eine Eigenschaft der Lichtquelle zu ändern, wenn
   i) eine Hand durch zumindest einen Abschnitt des Detektionsbereichs hindurch bewegt wird;
   ii) eine Hand in zumindest einem Abschnitt des Detektionsbereich stationär gehalten wird; und/oder
   iii) eine Hand in zumindest einem ersten Abschnitt des Detektionsbereich stationär gehalten wird und zusätzlich ein Signal aus einem zweiten Abschnitt des Detektionsbereichs von zumindest einem Sensor empfangen wird, der dem ersten Abschnitt im Wesentlichen gegenüber liegt.
4. Leuchtvorrichtung nach Ausführungsform 3, wobei die Leuchtvorrichtung ferner dazu eingerichtet ist, die zumindest eine Eigenschaft der Lichtquelle in eine jeweils entgegengesetzte Richtung zu steuern, wenn sich i), ii) oder iii) jeweils wiederholt.
5. Leuchtvorrichtung nach einer der Ausführungsformen 1 bis 4, wobei die zumindest eine Eigenschaft der Lichtquelle einen An-/Aus-Zustand, eine Lichtintensität und/oder eine Farbtemperatur aufweist.
6. Leuchtvorrichtung zur berührungslosen Steuerung einer Lichtquelle, umfassend:
   zumindest einen Sensor zum Empfangen eines optischen Signals, mit einem dem Sensor zugeordneten Detektionsbereich; und
   einen sich zumindest teilweise um eine zentrale Achse der Leuchtvorrichtung herum erstreckenden lichtleitenden Körper mit einem ersten dem Sensor zugeordneten Oberflächenbereich und einem zweiten dem Detektionsbereich zugewandten Oberflächenbereich;
   wobei die Leuchtvorrichtung dazu eingerichtet ist, eine Eigenschaft der Lichtquelle basierend auf einem von dem Sensor durch den lichtleitenden Körper hindurch empfangenen optischen Signal zu steuern.
7. Leuchtvorrichtung nach Ausführungsform 6, wobei der lichtleitende Körper dazu eingerichtet ist, von der Lichtquelle abgegebenes Licht durch den lichtleitenden Körper hindurch an die Umgebung abzugeben.
8. Leuchtvorrichtung nach Ausführungsform 6 oder 7, wobei der lichtleitende Körper dazu eingerichtet ist, das optische Signal von dem zweiten Oberflächenbereich zu dem ersten Oberflächenbereich und/oder von dem ersten Oberflächenbereich zu dem zweiten Oberflächenbereich zu leiten.
9. Leuchtvorrichtung nach einer der Ausführungsformen 6 bis 8, wobei sich der lichtleitende Körper im Wesentlichen vollständig um die zentrale Achse der Lichtquelle herum erstreckt, vorzugsweise wobei sich der lichtleitende Körper im Wesentlichen vollständig um die Lichtquelle und/oder ein mit der Lichtquelle verbundenes optisches Element herum erstreckt.
10. Leuchtvorrichtung nach einer der Ausführungsformen 6 bis 9, wobei der lichtleitende Körper im Wesentlichen rotationssymmetrisch in Bezug auf die zentrale Achse der Lichtquelle ausgebildet ist.
11. Leuchtvorrichtung nach einer der Ausführungsformen 6 bis 10, wobei der lichtleitende Körper als Vollkörper, insbesondere als ein Hohlzylinder, Hohlkegelabschnitt, und/oder Hohlellipsoidabschnitt ausgebildet ist.
12. Leuchtvorrichtung nach einer der Ausführungsformen 6 bis 11, wobei sich der Detektionsbereich im Wesentlichen vollständig entlang des zweiten Oberflächenbereichs erstreckt, insbesondere im Wesentlichen vollständig um die zentrale Achse der Lichtquelle herum.
13. Leuchtvorrichtung nach einer der Ausführungsformen 6 bis 12, wobei der zumindest eine Sensor im Wesentlichen mit dem ersten Oberflächenbereich in Berührung steht.
14. Leuchtvorrichtung nach einer der Ausführungsformen 6 bis 13, wobei der zumindest eine Sensor eine Mehrzahl von Sensoren aufweist, die um die zentrale Achse der Lichtquelle herum angeordnet sind.
15. Leuchtvorrichtung nach einer der Ausführungsformen 6 bis 14, wobei der lichtleitende Körper eine Aufnahme für ein Reflektorelement aufweist, wobei sich der zweite Oberflächenbereich entlang eines Randes der Aufnahme für ein Reflektorelement erstreckt.
16. Leuchtvorrichtung nach einer der Ausführungsformen 6 bis 15, wobei der lichtleitende Körper eine Aufnahme für die Lichtquelle aufweist, wobei sich der erste Oberflächenbereich entlang eines Randes der Aufnahme für die Lichtquelle erstreckt.
17. Sensorsystem zur berührungslosen Steuerung einer Lichtquelle, umfassend:
   zumindest einen Sensor zum Empfangen eines optischen Signals;
   wobei das Sensorsystem dazu eingerichtet ist, bei Anordnung an einem ersten Oberflächenbereich eines lichtleitenden Körpers an einem zweiten Oberflächenbereich des lichtleitenden Körpers einen Detektionsbereich bereitzustellen;
   wobei das Sensorsystem dazu eingerichtet ist, durch den lichtleitenden Körper hindurch optische Signale aus dem Detektionsbereich zu empfangen, so dass eine berührungslose Steuerung der Lichtquelle ermöglicht wird.
18. Sensorsystem nach Ausführungsform 17, wobei das Sensorsystem dazu eingerichtet ist, einen ringförmig durchgehenden Detektionsbereich entlang des zweiten Oberflächenbereichs bereitzustellen, wenn dieser ringförmig durchgehend ist.
19. Leuchtvorrichtung, insbesondere tragbare und/oder batteriebetriebene Leuchtvorrichtung, zur berührungslosen Steuerung einer Lichtquelle, insbesondere einer Leuchtvorrichtung nach einer der Ausführungsformen 1-16, mit einem Lage- und/oder Bewegungssensor, wobei die Leuchtvorrichtung dazu eingerichtet ist, die Lichtquelle zumindest teilweise basierend auf einem Signal des Lage- und/oder Bewegungssensors zu steuern.
20. Leuchtvorrichtung nach Ausführungsform 19, weiterhin aufweisend ein Sensorsystem zur berührungslosen Steuerung einer Lichtquelle der Leuchtvorrichtung, wobei die Leuchtvorrichtung dazu eingerichtet ist die berührungslose Steuerung der Lichtquelle basierend auf dem Sensorsystem in Abhängigkeit vom Lage- und/oder Bewegungssensor zu aktivieren und/oder zu deaktivieren.
21. Verfahren zur berührungslosen Steuerung einer Lichtquelle mit einer Leuchtvorrichtung, insbesondere einer Leuchtvorrichtung nach einer der Ausführungsformen 1-16, umfassend eine Mehrzahl von Sensoren zum Bereitstellen optischer Signale mit dem Schritt:
   Bereitstellen einer Mehrzahl optischer Signale durch die Mehrzahl von Sensoren derart, dass ein sich im Wesentlichen vollständig um eine zentrale Achse der Lichtquelle herum erstreckender Detektionsbereich erzeugt wird.
22. Verfahren nach Ausführungsform 21, wobei die Sensoren der Mehrzahl von Sensoren um eine zentrale Achse der Leuchtvorrichtung herum angeordnet sind.
23. Verfahren nach Ausführungsform 21 oder 22, wobei sich die von der Mehrzahl von Sensoren bereitgestellten optischen Signale im Detektionsbereich überschneiden.
24. Verfahren zur berührungslosen Steuerung einer Lichtquelle mit einer Leuchtvorrichtung, insbesondere einer Leuchtvorrichtung nach einer der Ausführungsformen 1-16, umfassend zumindest einen Sensor zum Empfangen eines optischen Signals, mit den folgenden Schritten:
   a. Empfangen von optischen Signalen durch den zumindest einen Sensor;
   b. Bestimmen eines ersten statistischen Mittelwerts basierend auf den empfangenen optischen Signalen über einen ersten Zeitraum und Bestimmen eines zweiten statistischen Mittelwerts basierend auf den empfangenen optischen Signalen über einen zweiten Zeitraum, wobei der zweite Zeitraum kürzer ist als der erste Zeitraum; und
   c. Ändern einer Eigenschaft der Lichtquelle, wenn eine Abweichung zwischen dem ersten statistischen Mittelwert und dem zweiten statistischen Mittelwert größer oder gleich einem vorbestimmten Grenzwert ist.
25. Verfahren nach Ausführungsform 24, wobei der erste statistische Mittelwert und/oder der zweite statistische Mittelwert einen Medianwert aufweist.
26. Verfahren nach Ausführungsform 24 oder 25, wobei die Schritte a. bis c. für eine Mehrzahl von Sensoren durchgeführt werden, die um eine zentrale Achse der Leuchtvorrichtung herum angeordnet sind, und bei einer Abweichung zumindest eines Sensor, die größer als ein vorbestimmter Grenzwert ist, eine Abweichung an zumindest einem im Wesentlichen gegenüberliegenden Sensor überprüft wird.
27. Verfahren nach einer der Ausführungsformen 21 bis 26, wobei die Sensoren jeweils zumindest teilweise zeitversetzt eingeschaltet sind.

## Patentansprüche

1. Leuchtvorrichtung zur berührungslosen Steuerung einer Lichtquelle, umfassend:
eine Mehrzahl von Sensoren zum Empfangen eines optischen Signals mit einem der Mehrzahl von Sensoren zugeordneten Detektionsbereich, der sich im Wesentlichen vollständig um eine zentrale Achse der Leuchtvorrichtung herum erstreckt,
wobei die Leuchtvorrichtung dazu eingerichtet ist, zumindest eine Eigenschaft der Lichtquelle basierend auf einem von der Mehrzahl von Sensoren empfangenen optischen Signal zu steuern.

2. Leuchtvorrichtung nach Anspruch 1, wobei zumindest einer der Mehrzahl von Sensoren dazu eingerichtet sind, ein von einer Hand im Detektionsbereich ausgesendetes und/oder reflektiertes optisches Signal, insbesondere ein Infrarotsignal, zu empfangen; und/oder
wobei die zumindest eine Eigenschaft der Lichtquelle einen An-/Aus-Zustand, eine Lichtintensität und/oder eine Farbtemperatur aufweist.

3. Leuchtvorrichtung nach Anspruch 1 oder 2, wobei die Leuchtvorrichtung dazu eingerichtet ist, die zumindest eine Eigenschaft der Lichtquelle zu ändern, wenn
i) eine Hand durch zumindest einen Abschnitt des Detektionsbereichs hindurch bewegt wird;
ii) eine Hand in zumindest einem Abschnitt des Detektionsbereich stationär gehalten wird; und/oder
iii) eine Hand in zumindest einem ersten Abschnitt des Detektionsbereich stationär gehalten wird und zusätzlich ein Signal aus einem zweiten Abschnitt des Detektionsbereichs von zumindest einem Sensor empfangen wird, der dem ersten Abschnitt im Wesentlichen gegenüber liegt,
vorzugsweise wobei die Leuchtvorrichtung ferner dazu eingerichtet ist, die zumindest eine Eigenschaft der Lichtquelle in eine jeweils entgegengesetzte Richtung zu steuern, wenn sich i), ii) oder iii) jeweils wiederholt.

4. Leuchtvorrichtung zur berührungslosen Steuerung einer Lichtquelle, umfassend:
zumindest einen Sensor zum Empfangen eines optischen Signals, mit einem dem Sensor zugeordneten Detektionsbereich; und
einen sich zumindest teilweise um eine zentrale Achse der Leuchtvorrichtung herum erstreckenden lichtleitenden Körper mit einem ersten dem Sensor zugeordneten Oberflächenbereich und einem zweiten dem Detektionsbereich zugewandten Oberflächenbereich;
wobei die Leuchtvorrichtung dazu eingerichtet ist, eine Eigenschaft der Lichtquelle basierend auf einem von dem Sensor durch den lichtleitenden Körper hindurch empfangenen optischen Signal zu steuern.

5. Leuchtvorrichtung nach Anspruch 4, wobei der lichtleitende Körper dazu eingerichtet ist, von der Lichtquelle abgegebenes Licht durch den lichtleitenden Körper hindurch an die Umgebung abzugeben; und/oder
wobei der lichtleitende Körper dazu eingerichtet ist, das optische Signal von dem zweiten Oberflächenbereich zu dem ersten Oberflächenbereich und/oder von dem ersten Oberflächenbereich zu dem zweiten Oberflächenbereich zu leiten.

6. Leuchtvorrichtung nach Anspruch 4 oder 5, wobei sich der lichtleitende Körper im Wesentlichen vollständig um die zentrale Achse der Lichtquelle herum erstreckt, vorzugsweise wobei sich der lichtleitende Körper im Wesentlichen vollständig um die Lichtquelle und/oder ein mit der Lichtquelle verbundenes optisches Element herum erstreckt; und/oder
wobei der lichtleitende Körper im Wesentlichen rotationssymmetrisch in Bezug auf die zentrale Achse der Lichtquelle ausgebildet ist; und/oder
wobei der lichtleitende Körper als Vollkörper, insbesondere als ein Hohlzylinder, Hohlkegelabschnitt, und/oder Hohlellipsoidabschnitt ausgebildet ist; und/oder
wobei sich der Detektionsbereich im Wesentlichen vollständig entlang des zweiten Oberflächenbereichs erstreckt, insbesondere im Wesentlichen vollständig um die zentrale Achse der Lichtquelle herum.

7. Leuchtvorrichtung nach einem der Ansprüche 4 bis 6, wobei der zumindest eine Sensor im Wesentlichen mit dem ersten Oberflächenbereich in Berührung steht; und/oder
wobei der zumindest eine Sensor eine Mehrzahl von Sensoren aufweist, die um die zentrale Achse der Lichtquelle herum angeordnet sind; und/oder
wobei der lichtleitende Körper eine Aufnahme für ein Reflektorelement aufweist, wobei sich der zweite Oberflächenbereich entlang eines Randes der Aufnahme für ein Reflektorelement erstreckt; und/oder
wobei der lichtleitende Körper eine Aufnahme für die Lichtquelle aufweist, wobei sich der erste Oberflächenbereich entlang eines Randes der Aufnahme für die Lichtquelle erstreckt.

8. Sensorsystem zur berührungslosen Steuerung einer Lichtquelle, umfassend:
zumindest einen Sensor zum Empfangen eines optischen Signals;
wobei das Sensorsystem dazu eingerichtet ist, bei Anordnung an einem ersten Oberflächenbereich eines lichtleitenden Körpers an einem zweiten Oberflächenbereich des lichtleitenden Körpers einen Detektionsbereich bereitzustellen;
wobei das Sensorsystem dazu eingerichtet ist, durch den lichtleitenden Körper hindurch optische Signale aus dem Detektionsbereich zu empfangen, so dass eine berührungslose Steuerung der Lichtquelle ermöglicht wird.

9. Sensorsystem nach Anspruch 8, wobei das Sensorsystem dazu eingerichtet ist, einen ringförmig durchgehenden Detektionsbereich entlang des zweiten Oberflächenbereichs bereitzustellen, wenn dieser ringförmig durchgehend ist.

10. Leuchtvorrichtung, insbesondere tragbare und/oder batteriebetriebene Leuchtvorrichtung, zur berührungslosen Steuerung einer Lichtquelle, insbesondere einer Leuchtvorrichtung nach einem der Ansprüche 1-7, mit einem Lage- und/oder Bewegungssensor, wobei die Leuchtvorrichtung dazu eingerichtet ist, die Lichtquelle zumindest teilweise basierend auf einem Signal des Lage- und/oder Bewegungssensors zu steuern.

11. Leuchtvorrichtung nach Anspruch 10, weiterhin aufweisend ein Sensorsystem zur berührungslosen Steuerung einer Lichtquelle der Leuchtvorrichtung, wobei die Leuchtvorrichtung dazu eingerichtet ist die berührungslose Steuerung der Lichtquelle basierend auf dem Sensorsystem in Abhängigkeit vom Lage- und/oder Bewegungssensor zu aktivieren und/oder zu deaktivieren.

12. Verfahren zur berührungslosen Steuerung einer Lichtquelle mit einer Leuchtvorrichtung, insbesondere einer Leuchtvorrichtung nach einem der Ansprüche 1-7, umfassend eine Mehrzahl von Sensoren zum Bereitstellen optischer Signale mit dem Schritt:
Bereitstellen einer Mehrzahl optischer Signale durch die Mehrzahl von Sensoren derart, dass ein sich im Wesentlichen vollständig um eine zentrale Achse der Lichtquelle herum erstreckender Detektionsbereich erzeugt wird.

13. Verfahren nach Anspruch 12, wobei die Sensoren der Mehrzahl von Sensoren um eine zentrale Achse der Leuchtvorrichtung herum angeordnet sind; und/oder
wobei sich die von der Mehrzahl von Sensoren bereitgestellten optischen Signale im Detektionsbereich überschneiden; und/oder
wobei die Sensoren jeweils zumindest teilweise zeitversetzt eingeschaltet sind.

14. Verfahren zur berührungslosen Steuerung einer Lichtquelle mit einer Leuchtvorrichtung, insbesondere einer Leuchtvorrichtung nach einem der Ansprüche 1-7, umfassend zumindest einen Sensor zum Empfangen eines optischen Signals, mit den folgenden Schritten:
a. Empfangen von optischen Signalen durch den zumindest einen Sensor;
b. Bestimmen eines ersten statistischen Mittelwerts basierend auf den empfangenen optischen Signalen über einen ersten Zeitraum und Bestimmen eines zweiten statistischen Mittelwerts basierend auf den empfangenen optischen Signalen über einen zweiten Zeitraum, wobei der zweite Zeitraum kürzer ist als der erste Zeitraum; und
c. Ändern einer Eigenschaft der Lichtquelle, wenn eine Abweichung zwischen dem ersten statistischen Mittelwert und dem zweiten statistischen Mittelwert größer oder gleich einem vorbestimmten Grenzwert ist.

15. Verfahren nach Anspruch 14, wobei der erste statistische Mittelwert und/oder der zweite statistische Mittelwert einen Medianwert aufweist; und/oder
wobei die Schritte a. bis c. für eine Mehrzahl von Sensoren durchgeführt werden, die um eine zentrale Achse der Leuchtvorrichtung herum angeordnet sind, und bei einer Abweichung zumindest eines Sensor, die größer als ein vorbestimmter Grenzwert ist, eine Abweichung an zumindest einem im Wesentlichen gegenüberliegenden Sensor überprüft wird; und/oder
wobei die Sensoren jeweils zumindest teilweise zeitversetzt eingeschaltet sind.
